# EUROPÄISCHE PATENTSCHRIFT

(11) **EP 3 553 144 B1**
(45) Veröffentlichungstag und Bekanntmachung des Hinweises auf die Patenterteilung: **08.11.2023**
(21) Anmeldenummer: 19168356.4
(22) Anmeldetag: 10.04.2019
(51) Int. Cl.: C09J 7/20, C09J 7/21

(54) **FASER-MATRIX-KLEBEBAND**
FIBRE-MATRIX ADHESIVE TAPE
BANDE ADHÉSIVE EN MATRICE FIBREUSE

(30) Priorität: 11.04.2018 DE 202018101967 U
(43) Veröffentlichungstag der Anmeldung: 16.10.2019
(73) Patentinhaber: A + Composites GmbH, 66919 Weselberg (DE)
(72) Erfinder: Brzeski, Markus, 67685 Weilerbach (DE)
(74) Vertreter: Vièl, Christof

(56) Entgegenhaltungen:
- EP-A1- 2 843 020
- WO-A1-2014/047663
- US-A- 6 048 806
- "Elastizitätsmodul", Wikipedia - Die freie Enzykopädie, 21 July 2015 (2015-07-21), pages 1-4, XP055214256, Retrieved from the Internet: URL:https://de.wikipedia.org/w/index.php?t itle=Spezial:Buch&bookcmd=download&collect ion_id=5b9470f1f3b82e8df006c7696fe1cfa0117 ddf5e&writer=rdf2latex&return_to=Elastizit ätsmodul [retrieved on 2015-09-17]
- DATABASE WPI Week 200859 Thomson Scientific, London, GB; AN 2008-K02385 & JP 2008 183738 A (MITSUBISHI PLASTICS IND LTD) 14 August 2008 (2008-08-14) & JP 2008 183738 A (MITSUBISHI PLASTICS IND) 14 August 2008 (2008-08-14)

## Beschreibung

Die Erfindung betrifft ein Klebetape zur Befestigung an Oberflächen, insbesondere ein Faser-Matrix-Klebeband, gemäß dem Oberbegriff von Anspruch 1.

Im Handel erhältlich sind glasfaserverstärkte oder kohlestofffaserverstärkte Klebebänder und -folien mit verschiedenen sofort haftenden Kleberkomponenten. Diese faserverstärkten Klebebänder sind im Prinzip "normale" Klebebänder, deren Trägerschicht ein Fasergewebe ist. Üblicherweise sind bei diesen Klebebändern die Klebefilme etwas stärker. Oft sind die Fasern dabei als Gewebelage ausgebildet und die Klebeschicht bildet eine separate Lage auf der Gewebelage. Damit ist die Haftung des Klebebands aufgrund der Haftung der Klebeschicht an der Gewebelage begrenzt, weshalb diese Klebebänder nur in beschränkten Anwendungsbereichen einsetzbar sind.

Aus dem Markt bekannt ist zum Beispiel ein glasfaserverstärktes Klebeband in der Form eines Aluminium-Glasgewebe-Klebebands zum Befestigen, Abdecken und Dekorieren. Das Aluminium-Glasgewebe-Klebeband ist ein Laminat aus Aluminiumfolie und Glasgewebe, das eine Klebstoffschicht aus einem transparenten Silikonklebstoff trägt. Das Glasfasergewebe bewirkt eine hohe Quer- und Längsreißfestigkeit. Die Aluminiumfolie wirkt strahlungs- und hitzereflektiv, so dass eine Verwendung in einer Umgebung mit einer Temperatur von bis zu 1000 °C möglich ist.

Ein anders Produkt auf dem Markt ist faserverstärktes Klebeband zum Verschließen von Verpackungen. Bei diesem Klebeband wird eine hohe Reißfestigkeit dadurch erreicht, dass sich in der versiegelten Lage Polyesterfäden befinden.

Aus dem Stand der Technik ist ferner mit der DE 20 2014 011 009 U1 eine ähnliche Lösung bekannt, bei der auf einer, auf Epoxidharz basierenden wärmehärtenden, Klebefolie eine Faserschicht aufgebraucht ist. Auf der Faserschicht ist eine Klebstoffschicht aufgebracht. Die Faserschicht ist mattenförmig, insbesondere als Web-, Maschen- oder Wirrmatte. Bei der Klebefolie befindet sich die ungehärtete Folie auf einer oder beiden Seiten des Faserträgers.

Die WO 2014/047663 A1 beschreibt ein klebbares flexibles Verbundwerkstoffsystem. Das Verbundwerkstoffsystem besteht aus vorgeformten Bändern und Folien, die lamellenartige Anordnungen mit technisch hergestellten flexiblen Komposit-Zusammensetzungen sind. Das Verbundlaminatband weist eine Fasermatrixschicht auf, wobei die Fasermatrixschicht ein ausgebreitetes Filament mit Monofilamenten darin ist. Die Monofilamente liegen in einer ersten vorbestimmten Richtung innerhalb des Verbundlaminatbandes. Das Verbundlaminatband besitzt eine an eine Seite der Fasermatrixschicht gebundene Haftschicht.

Die EP 2 843 020 A1 betrifft einen Verbundstoff zum Verbinden von mindestens zwei Teilen aus Verbundmaterial. Der Verbundstoff besteht aus einer ersten Schicht aus klebendem Material, einer zweiten Schicht aus mindestens einem vorimprägnierten Verbundmaterial, die an die erste Schicht angrenzt und einer dritten Schicht aus klebendem Material, die an die zweite Schicht angrenzt.

Die US 6 048 806 A beschreibt ein Klebeband. Das Klebeband besteht aus einem Substrat, das aus regelmäßig beabstandeten Fasern in Abwärts- und Querrichtung des Gewebes besteht, wobei die Fasern nicht gewebt, mit Polymer beschichtet und in das Substrat eingebettet sind, so dass die Kett- und Schussfasern an ihrem Überlappungspunkt sicher verbunden sind, aber die Fasern nicht vollständig mit dem Polymer umhüllt sind. Auf mindestens einem Teil des Polymers ist ein Haftkleber aufgetragen und das Klebeband ist in Abwärts- und Querrichtung des Gewebes von Hand zerreißbar.

Der Nachteil dieser aus dem Stand der Technik bekannten Klebebänder bzw. Klebefolien ist, dass die Gewebefaser und die Klebstoffschicht nur unzureichend aneinander haften und damit das Klebeband nur für begrenzte Einsatzzwecke verwendbar ist. Ferner weisen Klebebänder aus dem Stand der Technik den Nachteil auf, dass die Trägerschicht eine unzureichende Formstabilität hat, wodurch diese Klebebänder ungeeignet sind, Bauteilen, auf denen sie haften, eine zusätzliche mechanische Stabilität zu verleihen, zum Beispiel gegen Biegebeanspruchung.

Ferner ist aus dem Stand der Technik mit der DE 10 2006 023 935 A1 ein durch Filamente verstärktes Klebeband bekannt. Problematisch ist bei diesem Klebeband, dass die Festigkeiten aufgrund der dünnen Trägerschicht stark begrenzt wird. Es können nur sehr dünne und mechanisch schwache Filamente verwendet werden. Bei diesen Trägerschichten ist nicht gewährleistet, dass das Filament vollständig in das Matrixmaterial eingebettet liegt. Auch bei den darin offenbarten geringen Fasergehalten.

Es ist die Aufgabe der Erfindung ein Klebeband bereitzustellen, das die Nachteile im Stand der Technik überwindet und insbesondere für viele Anwendungszwecke einsetzbar ist.

Die Aufgabe wird durch ein Klebeband gemäß dem kennzeichnenden Teil von Anspruch 1 gelöst. Vorteilhafte Ausgestaltungen bilden den Gegenstand der jeweiligen Unteransprüche.

Die Erfindung umfasst ein Klebeband mit einer Trägerschicht und einer daran haftenden Klebeschicht. Die Trägerschicht ist aus einem Matrixmaterial, in das Fasern eingebettet liegen. Bei der derart ausgebildeten Trägerschicht sind die Fasern vollständig in das Matrixmaterial eingebettet, so dass die Klebstoffschicht nur mit dem Matrixmaterial und nicht mit den Fasern in Kontakt kommt. Die Fasern verstärken das Matrixmaterial und umfassen zum Beispiel Fasern aus Kohlenstoff, Glas, Aramid oder Kunststoff. Die Trägerschicht erlaubt es, aufgrund der Formstabilität, auch Bauteilen, auf denen sie haften, eine zusätzliche Stabilität gegen Biegebeanspruchung zu verleihen. Auf diese Art und Weise wird ein vielseitig einsetzbares Klebeband bereitgestellt.

Die Fasern liegen derart vollständig in dem Matrixmaterial eingebettet, dass diese an mindestens einer Seitenfläche vollständig unter der Oberfläche des Matrixmaterials der Trägerschicht liegen. Vorteilhafterweise sind die Fasern derart vollständig in dem Matrixmaterial eingebettet, dass keine Seitenfläche der Trägerschicht von diesen durchtreten wird. Die Seitenflächen sind die, in Längsrichtung seitlich von dem Matrixmaterial gebildeten, Flächen, also nicht die Stirnflächen. So bildet das Matrixmaterial an den Seitenflächen eine glatte Oberfläche, an der die Klebstoffschicht vollflächig und gleichmäßig haftet.

Das Matrixmaterial umfasst Poren, wobei der Volumenanteil der Poren maximal 10 % ist. Der niedrige Volumenanteil der Poren im Matrixmaterial gewährleistet eine hohe Festigkeit und somit wenig Flexibilität der Trägerschicht.

Die Fasern haben einen Faservolumengehalt von 15 % bis 80 %, bezogen auf das Volumen des Trägermaterials. Besonders bevorzugt ist, dass die Fasern einen Faservolumengehalt von 20 % bis 70 % haben. Der hohe Fasergehalt erlaubt die Aufnahme großer Kräfte, ist aber gleichzeitig so niedrig gehalten, dass die Fasern von dem Matrixmaterial sicher vollständig umschlossen werden.

Ein technisch bevorzugter Aspekt der Erfindung sieht vor, dass die Fasern unidirektional in dem Matrixmaterial angeordnet liegen. Die Fasern sind dabei entweder kontinuierlich oder diskontinuierlich ausgebildet. Die derart angeordneten Fasern erlauben die Aufnahme von Kräften in Längsrichtung des Klebebands, zum Beispiel wenn das Klebeband auf ein zu verstärkendes Bauteil aufgeklebt wird. Dabei können auch kurze Stücke (Schnipsel bzw. Patches) geschichtet werden.

Vorteilhafterweise können die Fasern derart ausgebildet sein, um ein E-Modul im Bereich von 10 GPa bis 1000 GPa zu haben.

Bevorzugt können die Fasern derart ausgebildet sein, um eine Zugfestigkeit im Bereich von 50 MPa bis 10000 MPa aufzuweisen.

Es ist ferner bevorzugt, dass das Matrixmaterial ein Thermoplast, ein Duroplast, ein Elastomer oder ein thermoplastisches Elastomer, ist. Auch Mischungen sind für das Matrixmaterial einsetzbar.

Gemäß einem besonders bevorzugten Aspekt hat die Trägerschicht eine Stärke im Bereich von 0,05 mm bis 7 mm. Insbesondere im Bereich von 0,1 mm bis 0,5 mm lassen sich die Vorteile hinsichtlich der Verstärkung anderer Bauteile verwirklichen. Vorteilhafterweise hat die Trägerschicht eine Breite von 6 mm bis 2000 mm.

Ein anderer besonders bevorzugter Aspekt sieht vor, dass die Klebeschicht eine Stärke im Bereich von 0,01 mm bis 2 mm hat. Die Stärke der Klebeschicht ist je nach verwendeter Klebstoffkomponente und Einsatzweck änderbar. Es können auch Partikel bzw. Binderpulver mit jeweiligen Härter- oder Harz-Komponenten verwendet werden.

Vorteilhafterweise ist die Klebeschicht aus der Gruppe Polymerisations-, Polyadditions- und Polykondensationsklebstoffen, lösungsmittelhaltige Klebstoffe, Dispersionsklebstoffe, Schmelzklebstoffe, Kontaktklebstoffe oder Plastisole. Insbesondere werden Epoxid- oder Polyurethan-Klebstoffe, Phenol-Formaldehydharz-Klebstoffe oder Silikone, Methylmethacrylat-Klebstoffe, Cyanacrylat-Klebstoffe, anaerob härtende Klebstoffe oder Kombinationen aus diesen verwendet.

Bevorzugt ist die Klebeschicht aus der Gruppe thermoplastische Schmelzklebstoffe, wie Ethylenvinylacetat Copolymere (EVA), thermoplastische Kautschuke (TK), synthetische Kautschuke (SBS/SIS), Polyester (PET), Polyester (PES), Polyamide (PA), Polyolefine (PO), amorphe Poly-a-olefine (APAO), der Gruppe reaktive oder gekapselte Schmelzklebstoffe (z.B. durch UV, Feuchtigkeit, Temperatur), wie Polyurethan-Schmelzklebstoffe (PUR), Polyolefin-Schmelzklebstoffe (POR), Acrylate, Silan-terminierte Schmelzklebstoffe, Epoxide mit thermoplastischen Charakter, Silikone mit thermoplastischen Charakter sowie der Gruppe dauerklebrige Schmelzklebstoffe oder Elastomere, wie Ethylenvinylacetat Copolymere (EVA), thermoplastische Kautschuke (TK), synthetische Kautschuke (SBS/SIS), Polyester (PET), Polyester (PES), Polyamide (PA), Polyolefine (PO), amorphe Poly-a-olefine (APAO) oder aus Kombinationen dieser Gruppen.

Bevorzugt ist die Klebeschicht wärmehärtend oder kalthärtend ausgebildet. Die beiden Varianten sind jeweils für spezielle Einsatzwecke verwendbar. So kann die wärmhärtende Klebeschicht zum Beispiel in maschinellen Prozessen gut eingesetzt werden. Die kalthärtende Klebeschicht ist in Anwendungen, bei denen keine Heizvorrichtung zur Verfügung steht, vorteilhaft.

Im Folgenden wird die Erfindung anhand der in den beigefügten Zeichnungen dargestellten Beispiele näher erläutert.

Es zeigen:
- Fig. 1: perspektivische Seitenansicht eines Ausführungsbeispiels des erfindungsgemäßen Klebebands;
- Fig. 2: eine Schnittansicht des Klebebands aus Fig. 1;
- Fig. 3: eine schematische Darstellung eines Herstellungsprozesses für ein Klebeband gemäß Fig. 1;
- Fig. 4: eine schematische Darstellung eines alternativen Herstellungsprozesses für ein Klebeband gemäß Fig. 1;
- Fig. 5: ein Anwendungsbeispiel für ein Klebeband gemäß Fig. 1 an einer medizinischen Stütze; und

- Fig. 6: ein anderes Anwendungsbeispiel für ein Klebeband gemäß Fig. 1 in Form von einer Befestigung an einer Transportkiste.

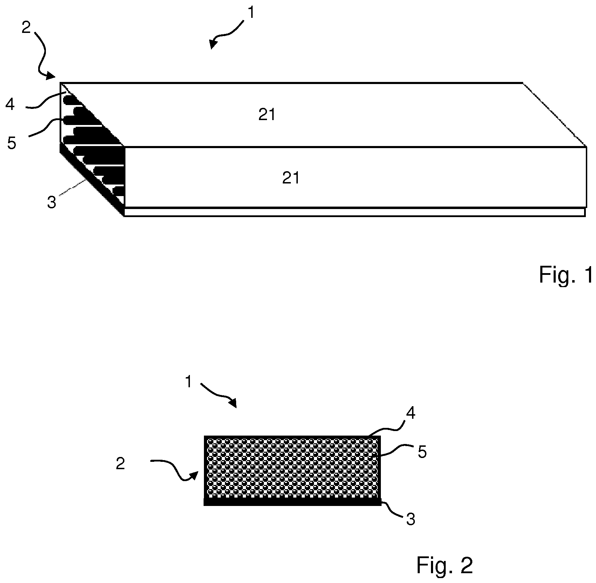

In Fig. 1 ist ein Abschnitt eines Klebebands 1 gemäß der Erfindung dargestellt. Das Klebeband 1 hat obenliegend eine Trägerschicht 2, an der unten eine Klebeschicht 3 haftet.

Die Trägerschicht 2 ist aus einem Matrixmaterial 4, in das Fasern 5 eingebettet liegen. Die Stärke der Trägerschicht 2 ist im gezeigten Beispiel im Bereich von 0,1 mm bis 7 mm.

Das Matrixmaterial 4 ist vorteilhafterweise aus einem Thermoplast, einem Duroplast, einem Elastomer oder Mischungen davon. Das dargestellte Matrixmaterial 4 hat einen Volumenanteil der Luftporen von weniger als 10 %, wobei die Luftporen nicht explizit darstellbar sind.

In das Matrixmaterial 4 sind die Fasern 5 derart vollständig eingebettet, dass diese an allen Seitenflächen 21 vollständig innerhalb des Matrixmaterials 4 liegen. Damit liegen die Fasern 5 vollständig unter der die jeweilige Seitenfläche 21 bildenden Oberfläche.

An der Stirnfläche ist erkennbar, dass die Fasern 5 unidirektional in Längsrichtung in dem Matrixmaterial 4 angeordnet liegen. Die gezeigten Fasern 5 sind kontinuierlich ausgebildet. Insgesamt ist im gezeigten Beispiel der Faservolumengehalt im Bereich von 20 % bis 70 % bezogen auf das Volumen der Trägerschicht 2.

Die Klebeschicht 3 kann grundsätzlich wärmehärtend oder kalthärtend ausgebildet sein, wobei diese aus den Gruppen der Polymerisations-, Polyadditions- und Polykondensationsklebstoffen, Lösungsmittelhaltige Klebstoffe, Dispersionsklebstoffe, Schmelzklebstoffe, Kontaktklebstoffe, oder Plastisole ausgewählt ist. Für das gezeigte Beispiel kann der Klebstoff ein Epoxid-, Schmelz- oder Polyurethan-Klebstoff sein. Die Klebeschicht 3 hat eine Stärke im Bereich von 0,01 mm bis 2 mm hat, wobei die dargestellte Stärke (Dicke) nicht dem realen Maß entspricht.

In dem gezeigten Beispiel kann auf die Trägerschicht 2 eine zusätzliche Schicht (nicht dargestellt) aus Metall, Keramik oder Kunststoff zum Beispiel an der die Oberfläche bildenden Seitenfläche 21 aufgebracht sein.

Fig. 2 ist eine Schnittansicht des Klebebands 1 aus Fig. 1, aus der die Stirnseite des Klebebandabschnitts 1 hervorgeht. Die Trägerschicht 2 hat in einem Matrixmaterial 4 angeordnete Fasern 5. Unten an das Matrixmaterial 4 anschließend ist eine Klebstoffschicht 3 angeordnet.

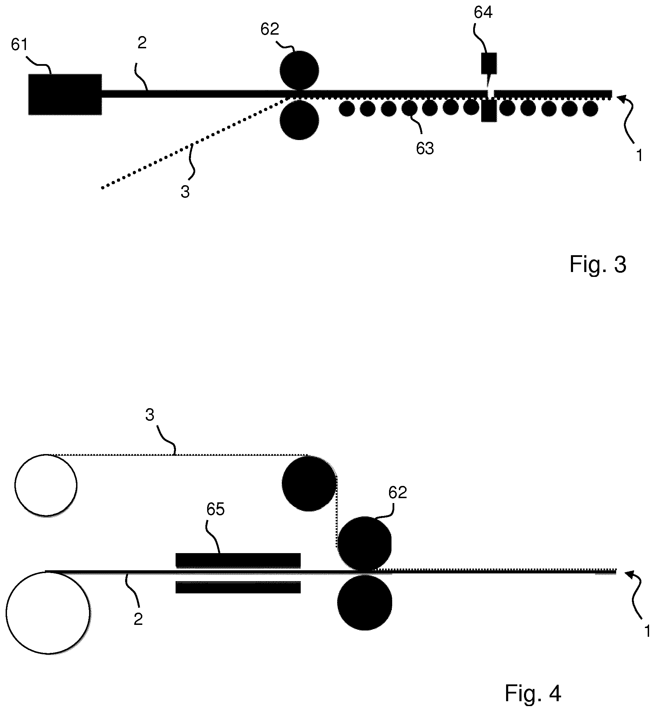

Fig. 3 ist eine schematische Darstellung von einem Herstellungsprozess, mit dem ein Klebeband gemäß Fig. 1 produziert wird. Dabei wird zum Beispiel in einer Extrusionsanlage 61 die Trägerschicht 2 aus Matrixmaterial (nicht dargestellt) und Fasern (nicht dargestellt) erzeugt. Der Trägerschicht 2 wird die Klebeschicht 3 zugeführt bevor diese gemeinsam durch eine Walzenpresse 62 geführt werden. Das Klebeband 1 wird über eine Walzeneinheit 63 zu einer Schneideeinheit 64 geführt.

Fig. 4 ist eine schematische Darstellung eines alternativen Herstellungsprozesses für ein Klebeband gemäß Fig. 1. Dabei wird die Trägerschicht 2 als Rollenware bereitgestellt. Die Trägerschicht 2 wird in diesem Beispiel in einer Heizeinrichtung 65 erwärmt und dieser dann die Klebeschicht 3 zugeführt, bevor diese gemeinsam durch eine Walzenpresse 62 geführt werden. In beiden Varianten zur Herstellung gilt, dass das Klebetape (vollständig) ausgehärtet werden muss, um die volle Festigkeit der Verbindung zum Untergrund errichten zu können.

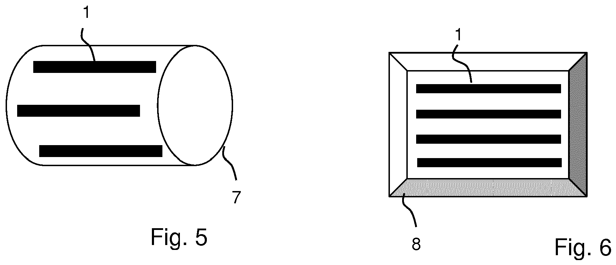

Fig. 5 ist ein Anwendungsbeispiel für ein Klebeband 1 gemäß Fig. 1 an einer medizinischen Stütze 7 und Fig. 6 ein anderes Anwendungsbeispiel für ein Klebeband 1 gemäß Fig. 1 in Form von einer Befestigung an einer Transportkiste 8. In beiden Anwendungsfällen dient das Klebeband 1 zur Verstärkung.

Die dargestellten Beispiele sind mit der gesamten Offenbarung kombinierbar.

## Patentansprüche

1. Klebeband (1) zum Befestigen, Abdecken und mechanischen Verstärken von Oberflächen mit einer Trägerschicht (2) und einer daran haftenden Klebeschicht (3), wobei die Trägerschicht (2) aus einem Matrixmaterial (4) besteht, in das Fasern (5) eingebettet liegen, **dadurch gekennzeichnet, dass** die Fasern (5) derart vollständig in dem Matrixmaterial (4) eingebettet liegen, dass diese an mindestens einer Seitenfläche (21) vollständig unter der Oberfläche des Matrixmaterials (4) der Trägerschicht (2) liegen und das Matrixmaterial (4) Poren umfasst, wobei der Volumenanteil der Poren maximal 10 % ist, wobei die Fasern (5) einen Faservolumengehalt von 15 % bis 80 % bezogen auf das Volumen der Trägerschicht (2) haben.

2. Klebeband (1) nach Anspruch 1 oder 2, wobei die Fasern (5) unidirektional in dem Matrixmaterial (4) angeordnet liegen, und wobei die Fasern (5) kontinuierliche oder diskontinuierliche Fasern (5) umfassen.

3. Klebeband (1) nach einem der vorangehenden Ansprüche, wobei die Faser (4) aus natürlichen oder synthetischen Polymeren oder anorganischen Stoffen bestehen.

4. Klebeband (1) nach einem der vorangehenden Ansprüche, wobei das Matrixmaterial (4) ein Thermoplast, ein Duroplast, ein Elastomer oder ein thermoplastisches Elastomer, umfasst.

5. Klebeband (1) nach einem der vorangehenden Ansprüche, wobei die Trägerschicht (2) eine Stärke im Bereich von 0,1 mm bis 7 mm hat.

6. Klebeband (1) nach einem der vorangehenden Ansprüche, wobei die Trägerschicht (2) eine Breite von 6 mm bis 2000 mm hat.

7. Klebeband (1) nach einem der vorangehenden Ansprüche, wobei die Klebeschicht (3) eine Stärke im Bereich von 0,01 mm bis 2 mm hat.

8. Klebeband (1) nach einem der vorangehenden Ansprüche, wobei die Klebeschicht (3) aus der Gruppe- umfassend Polymerisations-, Polyadditions- und Polykondensationsklebstoffe, lösungsmittelhaltige Klebstoffe, Dispersionsklebstoffe, Schmelzklebstoffe, Kontaktklebstoffe oder Plastisole ausgewählt ist.

9. Klebeband (1) nach einem der vorangehenden Ansprüche, wobei die Klebeschicht (3) aus der Gruppe thermoplastische Schmelzklebstoffe, insbesondere Ethylenvinylacetat Copolymere, thermoplastische Kautschuke, synthetische Kautschuke, Polyester Polyamide, Polyolefine, amorphe Poly-α-olefine, der Gruppe reaktive oder gekapselte Schmelzklebstoffe, insbesondere Polyurethan-Schmelzklebstoffe, Polyolefin-Schmelzklebstoffe, Acrylate, Silan-terminierte Schmelzklebstoffe, Epoxide mit thermoplastischen Charakter, Silikone mit thermoplastischen Charakter sowie der Gruppe dauerklebrige Schmelzklebstoffe oder Elastomere, insbesondereEthylenvinylacetat Copolymere, thermoplastische Kautschuke, synthetische Kautschuke, Polyester, Polyamide, Polyolefine, amorphe Poly-a-olefine oder aus Kombinationen dieser Gruppen.

10. Klebeband (1) nach einem der vorangehenden Ansprüche, wobei die Klebeschicht (3) wärmehärtend oder kalthärtend ausgebildet ist.

## Claims

1. Adhesive tape (1) for fastening, covering and mechanically reinforcing surfaces, having a backing layer (2) and an adhesive layer (3) adhering thereto, the backing layer (2) consisting of a matrix material (4) in which fibers (5) lie embedded, **characterized in that** the fibers (5) lie completely embedded in the matrix material (4) in such a manner that they lie completely below the surface of the matrix material (4) of the backing layer (2) on at least one side face (21), and the matrix material (4) comprises pores, the volume fraction of the pores being at most 10%, the fibers (5) having a fiber volume content of 15% to 80% based on the volume of the backing layer (2).

2. Adhesive tape (1) according to claim 1 or 2, wherein the fibers (5) lie unidirectionally arranged in the matrix material (4), and wherein the fibers (5) comprise continuous or discontinuous fibers (5).

3. Adhesive tape (1) according to any one of the preceding claims, wherein the fibers (4) consist of natural or synthetic polymers or inorganic materials.

4. Adhesive tape (1) according to any one of the preceding claims, wherein the matrix material (4) comprises a thermoplastic, a thermoset, an elastomer or a thermoplastic elastomer.

5. Adhesive tape (1) according to any one of the preceding claims, wherein the backing layer (2) has a thickness ranging from 0.1 mm to 7 mm.

6. adhesive tape (1) according to one of the preceding claims, wherein the backing layer (2) has a width of 6 mm to 2000 mm.

7. adhesive tape (1) according to one of the preceding claims, wherein the adhesive layer (3) has a thickness in the range from 0.01 mm to 2 mm.

8. adhesive tape (1) according to any one of the preceding claims, wherein the adhesive layer (3) is selected from the group comprising polymerization, polyaddition and polycondensation adhesives, solvent-based adhesives, dispersion adhesives, hot melt adhesives, contact adhesives or plastisols.

9. Adhesive tape (1) according to one of the preceding claims, wherein the adhesive layer (3) is selected from the group consisting of thermoplastic hotmelt adhesives, in particular ethylene vinyl acetate copolymers, thermoplastic rubbers, synthetic rubbers, polyester polyamides, polyolefins, amorphous poly-α-olefins, the group consisting of reactive or encapsulated hotmelt adhesives, in particular polyurethane hotmelt adhesives, polyolefin hotmelt adhesives, acrylates, silane-terminated hotmelt adhesives, epoxides of thermoplastic character, silicones of thermoplastic character, and of the group of permanently tacky hotmelt adhesives or elastomers, in particular ethylene vinyl acetate copolymers, thermoplastic rubbers, synthetic rubbers, polyesters, polyamides, polyolefins, amorphous poly-α-olefins or combinations of these groups.

10. Adhesive tape (1) according to one of the preceding claims, wherein the adhesive layer (3) is thermosetting or cold-curing.

## Revendications

1. Ruban adhésif (1) pour fixer, recouvrir et renforcer mécaniquement des surfaces, avec une couche de support (2) et une couche adhésive (3) adhérant à celle-ci, la couche de support (2) étant constituée d'un matériau de matrice (4) dans lequel sont noyées des fibres (5), **caractérisé en ce que** les fibres (5) sont noyées complètement dans le matériau de matrice (4) de telle sorte que celles-ci se trouvent sur au moins une face latérale (21) entièrement sous la surface du matériau de matrice (4) de la couche de support (2), et le matériau de matrice (4) comprend des pores, la proportion volumique des pores étant de 10 % maximum, les fibres (5) ayant une teneur volumique en fibres comprise entre 15 % et 80 % par rapport au volume de la couche de support (2).

2. Ruban adhésif (1) selon la revendication 1 ou 2, dans lequel les fibres (5) sont disposées de manière unidirectionnelle dans le matériau de matrice (4), et les fibres (5) comprennent des fibres continues ou discontinues (5).

3. Ruban adhésif (1) selon l'une des revendications précédentes, dans lequel les fibres (4) sont constituées de polymères naturels ou synthétiques ou de substances inorganiques.

4. Ruban adhésif (1) selon l'une des revendications précédentes, dans lequel le matériau de matrice (4) comprend un thermoplastique, un thermodurcissable, un élastomère ou un élastomère thermoplastique.

5. Ruban adhésif (1) selon l'une des revendications précédentes, dans lequel la couche de support (2) a une épaisseur comprise entre 0,1 mm et 7 mm.

6. Ruban adhésif (1) selon l'une des revendications précédentes, dans lequel la couche de support (2) a une largeur comprise entre 6 mm et 2 000 mm.

7. Ruban adhésif (1) selon l'une des revendications précédentes, dans lequel la couche adhésive (3) a une épaisseur comprise entre 0,01 mm et 2 mm.

8. Ruban adhésif (1) selon l'une des revendications précédentes, dans lequel la couche adhésive (3) est choisie dans le groupe comprenant les adhésifs de polymérisation, de polyaddition et de polycondensation, les adhésifs contenant des solvants, les adhésifs en dispersion, les adhésifs thermofusibles, les adhésifs de contact ou les plastisols.

9. Ruban adhésif (1) selon l'une des revendications précédentes, dans lequel la couche adhésive (3) est choisie dans le groupe des adhésifs thermofusibles thermoplastiques, en particulier des copolymères éthylène-acétate de vinyle, des caoutchoucs thermoplastiques, des caoutchoucs synthétiques, des polyesters polyamides, des polyoléfines, des poly-α-oléfines amorphes, dans le groupe des adhésifs thermofusibles réactifs ou encapsulés, en particulier des adhésifs thermofusibles polyuréthanes, des adhésifs thermofusibles polyoléfines, des acrylates, des adhésifs thermofusibles à terminaison silane, des époxydes à caractère thermoplastique, des silicones à caractère thermoplastique, ainsi que dans le groupe des adhésifs thermofusibles à adhérence permanente ou des élastomères, en particulier des copolymères éthylène-acétate de vinyle, des caoutchoucs thermoplastiques, des caoutchoucs synthétiques, des polyesters, des polyamides, des polyoléfines, des poly-α-oléfines amorphes, ou des combinaisons de ces groupes.

10. Ruban adhésif (1) selon l'une des revendications précédentes, dans lequel la couche adhésive (3) est conçue thermodurcissable ou durcissable à froid.
